# EUROPEAN PATENT APPLICATION

(11) **EP 3 333 444 A1**
(43) Date of publication of application: **13.06.2018**
(21) Application number: 16202705.6
(22) Date of filing: 07.12.2016
(51) Int. Cl.: F16D 65/54

(54) **A BRAKE SYSTEM COMPRISING A SPACE ADJUSTMENT MECHANISM**

(71) Applicant: Hidromek Hidrolik Ve Mekanik Makina Imalat Sanayi Ve Ticaret Anonim Sirketi, 06935 Ankara (TR)
(72) Inventor: KÖSE, Haydar Taylan, 06935 Ankara (TR); ERDEN, Ömer, 06935 Ankara (TR)
(74) Representative: Yamankaradeniz, Kemal

(57) **Abstract**

A space adjustment mechanism (B) used in the brake systems of agricultural machinery and heavy construction equipment, comprising a brake pusher making linear motion in x1-x2 directions by means of a hydraulic system, a spacer bolt (5) fixed on the axle hub, and a spring (8) concentric with this spacer bolt (5), for fixing the space between said brake pusher and counterplates so as to prevent brake stroke changes, a bush (9) confining the spring (8) between the spacer bolt (5) and the sliding surface (2.1) of the brake pusher and further comprising a positioning area for positioning said spring (8), a sliding surface (9.2) enabling linear sliding movement of said brake pusher in x1-x2 axes direction of the sliding surface (2.1), and a washer (11) that is independent or has an integral structure with the spacer bolt (5) allowing confining of the spring (8) within the positioning area (9.1).

## Description

### The Related Art

The invention relates to a brake system used in axle of agricultural machinery and heavy construction equipment and comprising a space adjustment mechanism, which fixes the amount of space/gap between the pusher and the friction disk and prevents compression of springs.

### The Prior Art

Hydraulic brake systems are conventionally used in axles of tractors used in agricultural field and heavy construction equipment. In such brake systems, the distance between the friction disks and the pusher is directly related to braking stroke (reciprocating distance of the brake pusher/piston). Setting this distance in initial production is directly related with production tolerances. The distance between the pusher and the friction disks increases due to wearing of the friction disks. Therefore, the braking stroke increases. The increase in braking stroke also increases the amount of hydraulic oil used for braking. The increase in the need for the amount of oil may not be met by the system sent through the operator pedal. This may lead to a dangerous situation in terms of operation of the braking system.

The condition of adjusting the space between the pusher and the friction disks due to wearing of the friction disks can be met by sliding of the bush that is interference fit mounted to the pusher. However, this sliding causes the springs that provide the space in between to get compressed more due to the wear of the friction disks. Since an increase in the number of disks will also cause an increase in total amount of wear, it would lead to more compression in reversing springs. The springs getting compressed more also causes the force applied by the springs onto the pusher to increase. This would require applying more hydraulic pushing force for the initial movement of the pusher.

In the patent research made about the prior art, a US patent document No. US5161649 is encountered. In this application, the invention comprises a pusher movable toward and away from a friction surface, a spring means urging the pusher away from the friction surface, and at least one bush slidable to an interference fit within a corresponding seat of the pusher to limit a return stroke of the latter. A multiple disk brake is disclosed which comprises at least one corresponding link for limiting the movement of the bush to a predetermined length relatively to a brake abutment surface, which comprises a spacer between a head of the link and the abutment surface. Thus, the effect of the machining tolerances of the link components on optimum clearance between the pusher and the friction surface is attenuated.

### Purpose of the Invention

The purpose of the invention is to provide a structure that has different technical characteristics than the prior art brake systems and brings advantage against and an initiative to the related technical field.

A purpose of the invention is to maintain the amount of space/clearance between the pusher mechanism and the friction disks fixed.

Another purpose of the invention is to provide a structure in which the brake stroke does not change by means of maintaining the clearance between the pusher mechanism and the friction disks fixed. In this way, the amount of oil needed for braking will be fixed. Since the required amount of oil will not increase as the friction disks wear down, possible safety problems would be avoided.

Another purpose of the invention is to prevent increase of spring compression due to disk wear.

Another purpose of the invention is to allow sliding of the brake pusher on the bush that is interference fit within the pusher so as to maintain the space between the pusher and the friction disks.

Another purpose of the invention is to prevent the increase of the required amount of oil for braking, by means of fixing the brake stroke.

Another purpose of the invention is to prevent the force required for the initial movement of the pusher from changing.

Another purpose of the invention is to prevent the hydraulic brake pressure providing the initial movement of the pusher from changing as a result of wearing down of the friction disks.

In order to achieve the above said purposes, the invention comprises
- a bush confining the spring between the spacer bolt and sliding surface of the brake pusher and comprising a positioning area for positioning the spring,
- a sliding surface enabling linear sliding movement of the brake pusher in x1-x2 axes direction of the sliding surface, and
- a washer that is independent or has an integral structure with the spacer bolt allowing confining of the spring within the positioning area.

### Figures for Better Understanding of the Invention

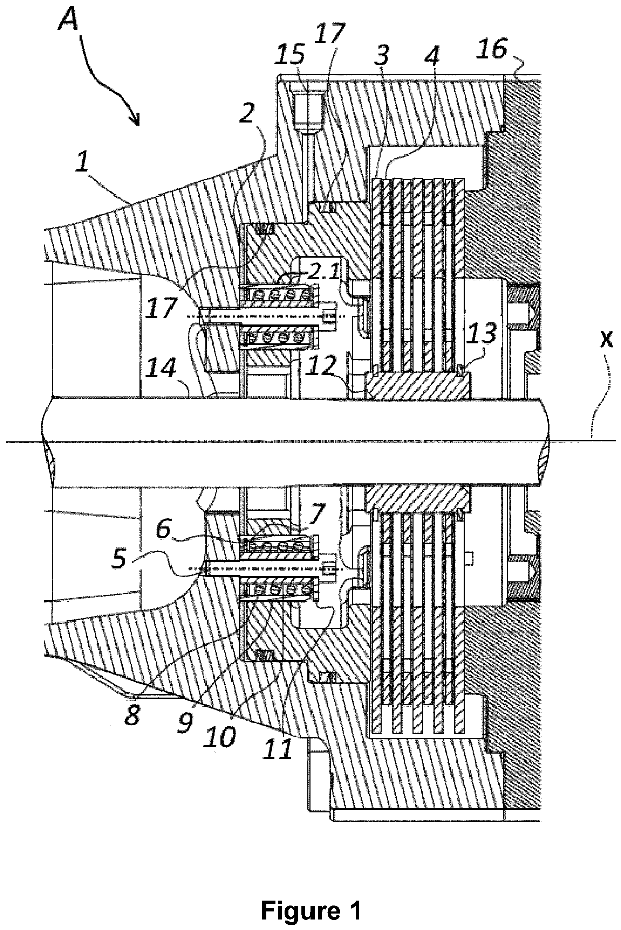

Figure 1 is the completely mounted section view of the brake system together with the space adjustment mechanism adapted to this brake system.

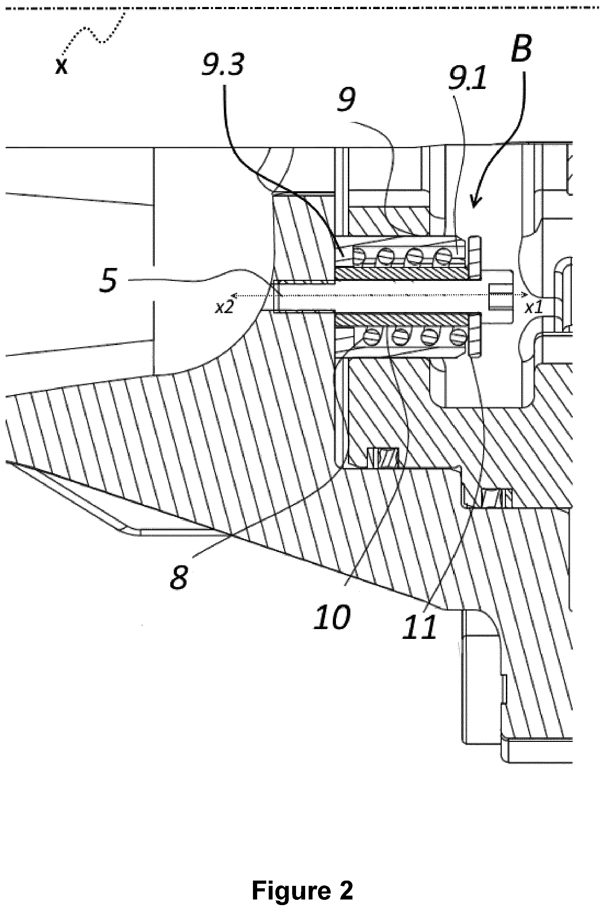

Figure 2 is a close-up detailed view of the components forming the space adjustment mechanism according to the invention.

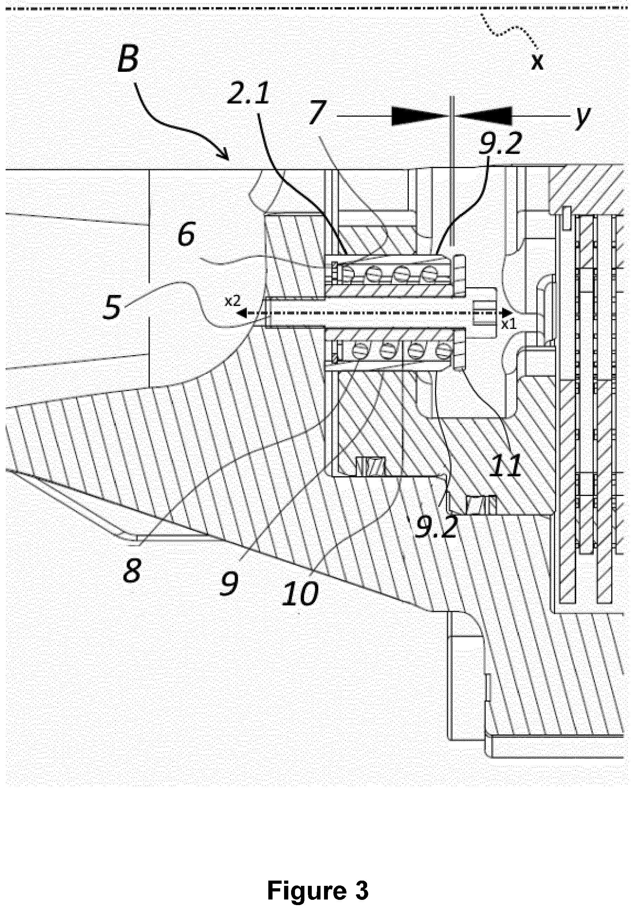

Figure 3 is a representative view showing the pusher movement distance (y) after hydraulic pressure is applied in the space adjustment mechanism.

### Reference Numbers

| | |
|---|---|
| A Brake system | 9. Bush |
| B Space adjustment mechanism | 9.1 Positioning area |
| 1. Axle hub | 9.2 Sliding surface |
| 2. Brake pusher | 9.3 Rabbet edge |
| 2.1 Sliding surface | 10. Spacer |
| 3. Counterplate | 11. Washer |
| 4. Friction plate | 12. Brake adapter |
| 5. Spacer/bush bolt | 13. Retaining ring |
| 6. Retaining ring | 14. Axle shaft |
| 7. Thrust washer | 15. Hydraulic oil inlet |
| 8. Spring | 16. Stationary flange |
| | 17. Seal |

### Detailed Description of the Invention

The invention relates to a space adjustment mechanism (B) used in the brake systems (A) of agricultural machinery and heavy construction equipment, comprising a brake pusher (2) making linear motion in x1-x2 directions by means of a hydraulic system, a spacer bolt (5) fixed on the axle hub (1), and a spring (8) concentric with this spacer bolt (5), for fixing the space between said brake pusher (2) and counterplate (3) so as to prevent brake stroke changes.

The novelty characteristic of the invention comprises: a bush (9) confining the spring (8) between the spacer bolt (5) and the sliding surface (2.1) of the brake pusher (2), and comprising a positioning area (9.1) for positioning said spring (8). In addition, it comprises a sliding surface (9.2) enabling linear sliding movement of said brake pusher (2) in x1-x2 axes direction of the sliding surface

(2.1). Furthermore, it comprises an independent washer (11) allowing confining of said spring (8) within the positioning area (9.1) or a washer (11) that has an integral structure with the spacer bolt (5). On the other hand, the spring (8) is placed between the washer (11) and the thrust washer (7), the washer (7) is connected to the bush (9) via the retaining ring (6) so as to allow movement of the spring (8) together with the bush (9), and thus the pre-load, or in other words, the initial mounting length of the spring (8) remains same/constant.

While the spring (8) can be positioned between the washer (11) and the thrust washer (7), it can also be positioned between the washer (11) and the rabbet edge (9.3). Also, in case a washer (11) having an integral structure with the spacer bolt (5) is formed, the spring (8) can also be placed between the thrust washer (7) or the rabbet edge (9.3).

Said space adjustment mechanism (B) comprises a retaining ring (6) positioned on the surface of said bush (9) that faces the axle hub (1) and at least one thrust washer (7) positioned together with the retaining ring (6) on the surface of the bush (9) that faces the axle hub (1).

Also, it comprises a rabbet edge (9.3) formed in an integral structure, eliminating the need for use of a thrust washer (7) on the surface of said bush (9) that faces the axle hub (1), and a spacer (10) centered between said bush (9) and spacer/bush bolt (5).

In general terms, the way of operation of the brake system (A) is as follows:
The counterplates (3) and friction plates (4) are placed such that one each counterplate (3) and friction plate (4) will be found between the brake pusher (2) and the stationary flange (16), respectively. The counterplates (3) are fixed in the axle hub (1) via pins. The friction plates (4) are fixed directly on the axle shaft (14) by means of a brake adapter (12) using a splined structure. Pressurized oil is applied to the brake pusher (2) from the hydraulic oil inlet (15) when the brake is stepped on. Sealing of the pressurized oil through the brake pusher (2) is ensured by means of seals (17). When oil with hydraulic pressure is applied on the brake pusher (2), the brake pusher (2) moves and applies axial force on the counterplate (3). In this way, the counterplates (3) and friction plates (4) are squeezed between the brake pusher (2) and the stationary flange (16). Friction force occurs between the counterplates (3) and the friction plates (4) as a result of axial force. This force forms a connection between the axle shaft (14) and the axle hub (1), and allows application of a torque against the wheels via the axle shaft (14) and thus braking occurs.

A suitable space needs to be found between the friction plates (4) and the counterplates (3) when there is no braking. By means of this space, the counterplate (3) and friction plates (4) are positioned without any friction between thereof, and thus friction is avoided when the brake is not stepped on. Therefore, this space is required to be present and not increased due to the components wearing down. Since braking is obtained with the movement of the pusher (2), in case the hydraulic effect is removed, the brake pusher (2) needs to return back to its initial position so as to form a space between the counterplates (3) and friction plates (4). This recovery force is provided by the spring (8) that is positioned in the bush (9) positioning area (9.1) in pre-loaded form. And a spacer (10) is placed between the spring (8) and the spacer bolt (5). While one side of the spacer (10) directly leans on the axle hub (1), the other side thereof contacts the washer (11) and is fixed to the axle hub (1) via the spacer bolt (5).

The length of the bush (9) is shorter than the length of the spacer (10) as much as the space between the counterplate (3) and the friction plates (4), or in other words, "Y". When hydraulic pressure is applied, the brake pusher (2) moves towards the counterplates (3). When the space between the counterplates (3) is closed, then the distance Y is also closed and braking occurs. When the pressure is removed, the preloaded spring (8) moves the brake pusher (2) back to its initial position due to the force it applies on the washer (11) and the thrust washer (7). This is because, the washer (11) and the spacer bolt (5) are fixed on the axle hub (1), and thus the force acting on the thrust washer (7) also acts on the retaining ring (13), and it directly acts on the bush (9), since the retaining ring (13) is connected to the bush (9). The bush (9) is fixed to the brake pusher (2) in an interference fit manner. As a result, this axial force applied by the spring (8) on the bush (9) causes the brake pusher (2) to return to its initial position. Since the braking force is provided by friction during operation of the system, the friction plates (4) wear down after a certain time period. In this case, the predetermined distance between the counterplates (3) and the friction plates (4) increases. The increase of this space causes the pusher (2) to require more stroke. And this leads to more hydraulic oil demand. When this change cannot be met by the brake system, an unsafe situation may occur. Therefore, the space between the counterplates (3) and the friction plates (4) is required to be kept at the same level continuously. This space increases when the friction plates (4) wear down. When the first hydraulic pressure is applied, the pusher (2) starts moving and this movement is as much as the distance "Y". At this point, the bush (9) that is interference fit to the pusher (2) leans against the washer (11) that is fixed on the axle hub (1) via the spacer bolt (5). However, even though this contact occurs, there would still be a space left between the friction plate (4) and the counterplates (3), due to wearing down. At this moment, since the hydraulic force applied on the brake pusher (2) is greater than then interference fit force between the bush (9) and the brake pusher (2), the pusher (2) slides on the bush (9) as much as the space left between and ensures braking. When the hydraulic pressure effect is removed, the pusher (2) is pushed backward by the spring (8) as much as the distance "Y". In this way, the space between the friction plates (4) and counterplates (3) would remain same all the time. Moreover, since the spring (8) directly leans on the bush (9) via the retaining ring (6) and the thrust washer (7), its position according to the bush (9) and its pre-load always stay fixed. That is to say, with this construction, the preload of the spring (8) would not change due to the wearing down of friction plate, or in other words, the spring (8) will not be compressed. Therefore, with this space adjustment mechanism (B), the pre-load force of the spring (8) will not change due to the wearing down of friction plates.

*The operation steps obtained with said space adjustment mechanism (B) are as follows.*
- fixing of said brake pusher (2) and bush (9) with each other via interference fit,
- confining the spring (8) between said bush (9) and spacer bolt (5),
- moving the brake pusher (2) in x1 direction, on which pressure is applied via hydraulic oil inlet (15),
- the hydraulic pressure force applied on said brake pusher (2) is higher than the interference fit force between the brake pusher (2) and the bush (9),
- the hydraulic pressure force applied on said brake pusher (2) overcomes the interference fit force and the brake pusher (2) then slides in x1 direction on the bush (9) sliding surface (9.2) as much as the amount of wear,
- the spring (8) found within the bush (9) applies a compulsive force for the backward movement of said brake pusher (2),
- said spring (8) force is lower than the interference fit force between the brake pusher (2) and the bush (9),
- the spring (8) that cannot overcome the interference fit force between said brake pusher (2) and bush (9), moves the bush (9) together with the brake pusher (2) in x2 direction,
- when the hydraulic pressure effect is removed, the brake pusher (2) is pushed backward by the spring (8) as much as the distance "Y",
- the length of said bush (9) is shorter than the spacer (10) length as much as the distance "Y", and
- the spring (8) that cannot overcome the interference fit force between said brake pusher (2) and bush (9), moves the bush (9) together with the brake pusher (2) on the spacer (10).

## Claims

1. A space adjustment mechanism (B) used in the brake systems (A) of agricultural machinery and heavy construction equipment, comprising a brake pusher (2) making linear motion in x1-x2 directions by means of a hydraulic system, a spacer bolt (5) fixed on the axle hub (1), and a spring (8) concentric with this spacer bolt (5), for fixing the space between said brake pusher (2) and counterplate (3) so as to prevent brake stroke changes, and it is **characterized by** comprising:
- a bush (9) confining the spring (8) between the spacer bolt (5) and the sliding surface (2.1) of the brake pusher (2), and comprising a positioning area (9.1) for positioning the spring (8),
- a sliding surface (9.2) enabling linear sliding movement of the brake pusher (2) in the x1 axis direction of the sliding surface (2.1), and
- a washer (11) that is independent or has an integral structure with the spacer bolt (5) allowing confining of the spring (8) within the positioning area (9.1).

2. The space adjustment mechanism (B) according to claim 1, **characterized by** comprising a retaining ring (6) positioned on the surface of the bush (9) that faces the axle hub (1).

3. The space adjustment mechanism (B) according to claim 1, **characterized by** comprising at least one thrust washer (7) positioned together with the retaining ring (6) on the surface of said bush (9) that faces the axle hub (1).

4. The space adjustment mechanism (B) according to claim 1, **characterized by** comprising a rabbet edge (9.3) formed in an integral structure, eliminating the need for use of a thrust washer (7) on the surface of the bush (9) that faces the axle hub (1).

5. The space adjustment mechanism (B) according to claim 1, **characterized by** comprising a spacer (10) centered between the bush (9) and the spacer/bush bolt (5).

6. A production method for a space adjustment mechanism (B) used in the brake systems (A) of agricultural machinery and heavy construction equipment, comprising a brake pusher (2) making linear motion in x1-x2 directions by means of a hydraulic system, a spacer bolt (5) fixed on the axle hub (1), and a spring (8) concentric with this spacer bolt (5), for fixing the space between said brake pusher (2) and counterplate (3) so as to prevent brake stroke changes, and it is **characterized by** comprising the operation steps of:
- fixing of the brake pusher (2) and bush (9) with each other via interference fit,
- confining the spring (8) between the bush (9) and the spacer bolt (5),
- moving the brake pusher (2) in x1 direction, on which pressure is applied via hydraulic oil inlet (15),
- the hydraulic pressure force applied on said brake pusher (2) is bigger than the interference fit force between the brake pusher (2) and the bush (9),
- the hydraulic pressure force applied on the brake pusher (2) overcomes the interference fit force and the brake pusher (2) then slides in x1 direction on the bush (9) sliding surface (9.2) as much as the amount of wear,
- the spring (8) found within the bush (9) applies a compulsive force for the backward movement of the brake pusher (2),
- the spring (8) force is lower than the interference fit force between the brake pusher (2) and the bush (9),
- the spring (8) that cannot overcome the interference fit force between said brake pusher (2) and bush (9), moves the bush (9) together with the brake pusher (2) in x2 direction.

7. The space adjustment mechanism (B) production method according to claim 6, **characterized by** comprising the operation step of pushing the brake pusher (2) backward by the spring (8) as much as the distance "Y", when the hydraulic pressure effect is removed.

8. The space adjustment mechanism (B) production method according to claim 6, **characterized by** comprising the operation step of the length of the bush (9) being shorter than the spacer (10) length as much as the distance "Y".

9. The space adjustment mechanism (B) production method according to claim 6, **characterized by** comprising the operation step of the spring (8) that cannot overcome the interference fit force between said brake pusher (2) and bush (9), moving the bush (9) together with the brake pusher (2) on the spacer (10).

10. The space adjustment mechanism (B) production method according to claim 6, **characterized by** comprising the operation steps of:
- placing the spring (8) between the washer (11) and the thrust washer (7),
- connecting the washer (7) to the bush (9) via the retaining ring (6) so as to allow movement of the spring (8) together with the bush (9), and
- maintaining the spring (8) pre-load or initial mounting length.

11. The space adjustment mechanism (B) production method according to claim 6, **characterized by** comprising the operation steps of:
- placing said spring (8) between the washer (11) and the rabbet edge (9.3), or
- in case a washer (11) having an integral structure with the spacer bolt (5) is formed, placing the spring (8) with the thrust washer (7) or the rabbet edge (9.3).
